# EUROPÄISCHE PATENTSCHRIFT

(11) **EP 0 946 325 B1**
(45) Veröffentlichungstag und Bekanntmachung des Hinweises auf die Patenterteilung: **29.08.2001**
(21) Anmeldenummer: 97912222.3
(22) Anmeldetag: 27.10.1997
(51) Int. Cl.: B22F 3/105

(54) **SELEKTIVES LASERSINTERN BEI SCHMELZTEMPERATUR**
SELECTIVE LASER SINTERING AT MELTING TEMPERATURE
FRITTAGE AU LASER SELECTIF A TEMPERATURE DE FUSION

(30) Priorität: 02.12.1996 DE 19649865
(43) Veröffentlichungstag der Anmeldung: 06.10.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: MEINERS, Wilhelm, D-52074 Aachen (DE); WISSENBACH, Konrad, D-52134 Herzogenrath (DE); GASSER, Andres, D-52066 Aachen (DE)
(74) Vertreter: Grimm, Ekkehard, Dipl.-Phys.
(86) Internationale Anmeldenummer: EP9705935
(87) Internationale Veröffentlichungsnummer: WO9824574

(56) Entgegenhaltungen:
- WO-A-92/08592
- US-A- 4 323 756
- US-A- 4 927 992
- US-A- 5 352 405
- DATABASE COMPENDEX ENGINEERING INFORMATION, INC., NEW YORK, NY, US NELSON J CHRISTIAN ET AL: "Model of the selective laser sintering of bisphenol-A polycarbonate" XP002057984 & IND ENG CHEM RES;INDUSTRIAL & ENGINEERING CHEMISTRY RESEARCH OCT 1993, Bd. 32, Nr. 10, Oktober 1993, Seiten 2305-2317,

## Beschreibung

Die vorliegende Erfindung betrifft ein Verfahren zur Herstellung eines Formkörpers, insbesondere eines Prototyps eines Produkts oder Bauteils, eines Werkzeugprototyps oder eines Ersatzteils, entsprechend dreidimensionalen CAD-Daten eines Modells des Formkörpers durch schichtweises Aufbauen aus pulverförmigem, metallischem Werkstoff, bei dem nacheinander mehrere Pulverschichten übereinander aufgebracht werden, wobei jede Pulverschicht vor dem Aufbringen der nächstfolgenden Pulverschicht mit einem fokussierten Laserstrahl in einem vorgegebenen Bereich, der einem ausgewählten Querschnittsbereich des Modells des Formkörpers entspricht, auf eine vorgegebene Temperatur erhitzt wird und bei dem der Laserstrahl jeweils entsprechend den CAD-Querschnittsdaten des ausgewählten Querschnittsbereichs des Modells über die jeweilige Pulverschicht geführt wird, wodurch diese Pulverschicht an der darunterliegenden Schicht fixiert wird.

Der zunehmende Wettbewerbsdruck zwingt Unternehmen in erhöhtem Maße, nicht nur bei gleichbleibend hoher Produktqualität wirtschaftlicher zu fertigen, sondern im Bereich der Produktentwicklung durch Einsatz neuer Verfahren Zeit und Kosten einzusparen. Die Produktlebenszeit verkürzt sich zunehmend. Neben der Produktqualität und den Produktionskosten ist für den Erfolg eines Produkts der Zeitpunkt seiner Markteinführung zunehmend von Bedeutung.

In vielen Industriezweigen ist es erforderlich, vor einer Serienfertigung, Prototypen zu fertigen, um sie bereits als funktionsmäßige Teile zum Testen in Versuchsanordnungen einzubauen. Vorzugsweise sollen solche Prototypen nicht nur in ihrer Form den Serienprodukten entsprechen, sondern sie sollen auch vorzugsweise in Bezug auf den Werkstoff dem Serienprodukt möglichst nahekommen, um solche Prototypen auch im Einsatz zu testen.

Aus den vorstehend genannten Gründen hat sich in den letzten Jahren eine Technologie für die vorstehend angegebenen Zwecke etabliert, die als Stereolithographie bezeichnet wird. Im Rahmen der Stereolithographie wird ein zu fertigender Prototyp datenverarbeitungsmäßig in einzelne Schichten unterteilt und die Daten der einzelnen Schichten in Bezug auf den herzustellenden Prototyp werden einer Fertigungsanordnung zugeführt. Eine solche Fertigungsanordnung besteht aus einem Flüssigkeitsbad mit einer UV-härtenden Flüssigkeit, die mit einem UV-Strahl entsprechend den Konturen und Feldern des herzustellenden Prototyps überstrichen wird, um die Flüssigkeit auszuhärten. Danach wird diese erste Schicht um eine definierte Schichtdicke abgesenkt, um darauf die zweite Schicht gemäß den erstellten Daten auszuhärten. Diese Verfahrensweise wird schichtweise fortgeführt, bis das gesamte Modell bzw. der Prototyp erstellt ist. Auf diese Art und Weise können dünne Rohrwandungen, Hohlräume oder in sich verschlungene Teile gefertigt werden, und zwar entsprechend dem Serienprodukt. Je nach dem Unterteilungsgrad der Schichten, d.h. entsprechend der Dicke jeder Schicht, die ausgehärtet wird, können auch Krümmungen sehr detailliert aufgebaut werden.

Neben dieser Stereolithographie, bei der Kunststoffmaterialien mittels UV-Licht ausgehärtet bzw. polymerisiert werden, ist auch ein Verfahren bekannt, einen Prototyp aus gesintertem, metallischem Werkstoffpulver aufzubauen. Ein solches Verfahren ist in der PCT WO 92/10343 beschrieben. Gemäß dem in dieser Druckschrift beschriebenen Verfahren wird zur Herstellung eines Teils eine erste Schicht eines sinterfähigen Pulvers aufgebracht und das Pulver entsprechend den Schichtbereichen des herzustellenden Teils gesintert. Danach wird diese Verfahrensweise wiederholt, indem jeweils weitere Schichten auf die jeweils zuvor gesinterte Schicht aufgebracht werden, die den jeweiligen Schichten bzw. Querschnittsflächenbereichen des herzustellenden Teils entsprechen.

Aus "Heinz Haferkampt et al, Laserstrahl-Sintern zur Herstellung von Blechformwerkzeugen" in der Zeitschrift "BLECH ROHRE PROFILE, 43, 1996, Seiten 317 bis 319" ist es bekannt, Metallstrukturen durch schichtweises lokales Sintern bzw. Verschmelzen von vordeponierten Metallpulverschichten mit fokussierter Laserstrahlung aufzubauen. Hierbei werden die Metallstrukturen aus pulverförmigen Werkstoffen hergestellt, wobei mehrere übereinanderliegende Metallpulverschichten mit einer Dicke von jeweils 0,1 bis 0,2 mm nacheinander aufgebracht und jeweils mit Laserstrahlung unter einer Argon-Schutzgasatmosphäre bestrahlt werden.

Dieses bekannte Verfahren benutzt ein Pulversystem, das aus einer mechanischen Mischung mehrerer Stoffe besteht, zum Beispiel Bronze und Nickel. Es werden somit nach diesem System, das unter dem Namen "Rapid Prototyping" bekannt ist, mechanische Mischungen (Mehrstoffsysteme) verwendet. Mechanische Mischungen bedeutet hierbei, daß die Pulverpartikel eines Stoffes (Bronze) mit den Pulverpartikeln des anderen Stoffes (Nickel oder Aluminium) gemischt werden. Die Stoffmischung ist so gewählt, daß Stoffe mit deutlich unterschiedlicher Schmelztemperatur kombiniert werden. In diesem Dokument wird in dem Abschnitt 2 " Verfahrensprinzip" in den ersten Zeilen von schichtweisem, lokalem Versintern bzw. Verschmelzen gesprochen, wobei dann erwähnt ist, daß die Bearbeitung über die Schmelzphase erfolgt. Die angesprochene "Schmelzphase" bezieht sich hierbei auf den Stoff mit der niedrigen Schmelztemperatur der mechanischen Pulvermischung. Beispielsweise wird für die Stoffmischung aus Bronze und Nickel eine Verarbeitungstemperatur von 900 bis 1.000°C angegeben. Da die Schmelztemperatur von Nickel jedoch 1.455°C beträgt, werden bei dem Temperaturbereich von 900 bis 1.000°C, der angegeben ist, nur die Bronze-Pulverteilchen geschmolzen, da die Schmelztemperatur von Bronze <900°C einzuordnen ist. In diesem Dokument ist zwar das Pulversystem als bindemittelfrei beschrieben, allerdings ist gerade im Sinne der vorliegenen Anmeldung der niedrigschmelzende Stoff, d.h. die Bronze, als das Bindemittel anzusehen, da dieser Stoff die hochschmelzenden Stoffpartikel, die in der festen Phase verbleiben, zusammenbindet. Dies ist auch ausdrücklich auf Seite 318, zweite Spalte, Zeilen 6 bis 10, der Druckschrift, angegeben. Aufgrund dieses Aufbaus der nach dem "Rapid Prototyping" hergestellten Bauteile ergeben sich Strukturen, die "signifikant unterhalb von 100% der Dichte des Ausgangsmaterials liegen" (siehe Seite 318, dritte Spalte, erster Absatz). Weiterhin wird angegeben, daß aufgrund der geringen Festigkeits- und Korrosionseigenschaften sowie der Temperaturbeständigkeit der Strukturen der Einsatz als Funktionsbauteile nur eingeschränkt möglich ist. (Siehe Seite 319, zweite Spalte, die letzten vier Zeilen).

Ein gemeinsamer Nachteil der heute auf dem Markt verfügbaren Verfahren, wie Stereolithographie, Sintern von Metallpulvern, besteht darin, daß hierdurch auf direktem Weg keine metallischen Prototypen hergestellt werden können, die für einen betriebsmäßigen Einsatz, beispielsweise als Abgaskrümmer eines Kraftfahrzeugs, einsetzbar sind. Die erzeugten Bauteile bestehen aus Kunststoffen, Metall, Wachs oder Papier, die betriebsmäßige Funktionsprüfungen, insbesondere unter hoher Temperatur und starken Belastungen, nicht zulassen.

In Bezug auf das Sinterverfahren, wie es auch aus der vorstehend zitierten Druckschrift bekannt ist, werden im wesentlichen zwei Verfahrensvarianten derzeit verfolgt, zum einen das direkte Sintern und zum anderen das indirekte Sintern. Beim indirekten Sintern wird das metallische Werkstoffpulver mit einem Polymer umhüllt oder mit einem anderen, sinterfähigen Hüllmaterial, wie Sinterhilfsmittel, was für solches Metall erforderlich ist, das selbst nicht sinterfähig ist. Bei dem Sintervorgang wird nur das Polymermaterial oder das Hüllmaterial aufgeschmolzen oder gesintert und bindet dadurch die Metallpartikel zusammen. Der so erzeugte sogenannte Grünling muß jedoch noch in einem Folgeprozeß nachbehandelt werden, beispielsweise in Form einer Oberflächenglättung oder eines Ausbrennens des Binders aus Polymermaterial. Oder es müssen meistens solche Bauteile noch durch Nachsintern und Infiltrieren verdichtet und verfestigt werden, wodurch sich Maß- und Formveränderungen durch Schrumpfung oder Verzug ergeben können. Bei der direkten Sinterung besteht die Pulvermischung aus einem niedrig- und einem hochschmelzenden Material. Bei einer Bearbeitung wird nur die niedrigschmelzende Komponente

aufgeschmolzen und fungiert als Binder für die hochschmelzenden Pulverpartikel. Dieses Verfahren hat den Nachteil, daß die hergestellten Bauteile eine Dichte kleiner ca. 80% aufweisen und eine geringe Festigkeit haben. Deshalb ist auch bei dieser Verfahrensvariante eine direkte Erprobung oder ein Einsatz des Bauteils unter betriebsmäßigen oder gar extremen Testbedingungen nicht möglich.

Ein gemeinsamer Nachteil der heute auf dem Markt verfügbaren Verfahren, wie Stereolithographie, Sintern von Metallpulvern, besteht darin, daß hierdurch auf direktem Weg keine metallischen Prototypen hergestellt werden können, die für einen betriebsmäßigen Einsatz, beispielsweise als Abgaskrümmer eines Kraftfahrzeugs, einsetzbar sind. Die erzeugten Bauteile bestehen aus Kunststoffen, Metall, Wachs oder Papier, die betriebsmäßige Funktionsprüfungen, insbesondere unter hoher Temperatur und starken Belastungen, nicht zulassen.

In Bezug auf das Sinterverfahren, wie es auch aus der vorstehend zitierten Druckschrift bekannt ist, werden im wesentlichen zwei Verfahrensvarianten derzeit verfolgt, zum einen das direkte Sintern und zum anderen das indirekte Sintern. Beim indirekten Sintern wird das metallische Werkstoffpulver mit einem Polymer umhüllt oder mit einem anderen, sinterfähigen Hüllmaterial, wie Sinterhilfsmittel, was für solches Metall erforderlich ist, das selbst nicht sinterfähig ist. Bei dem Sintervorgang wird nur das Polymermaterial oder das Hüllmaterial aufgeschmolzen oder gesintert und bindet dadurch die Metallpartikel zusammen. Der so erzeugte sogenannte Grünling muß jedoch noch in einem Folgeprozeß nachbehandelt werden, beispielsweise in Form einer Oberflächenglättung oder eines Ausbrennens des Binders aus Polymermaterial. Oder es müssen meistens solche Bauteile noch durch Nachsintern und Infiltrieren verdichtet und verfestigt werden, wodurch sich Maß- und Formveränderungen durch Schrumpfung oder Verzug ergeben können. Bei der direkten Sinterung besteht die Pulvermischung aus einem niedrig- und einem hochschmelzenden Material. Bei einer Bearbeitung wird nur die niedrigschmelzende Komponente aufgeschmolzen und fungiert als Binder für die hochschmelzenden Pulverpartikel. Dieses Verfahren hat den Nachteil, daß die hergestellten Bauteile eine Dichte kleiner ca. 80% aufweisen und eine geringe Festigkeit haben. Deshalb ist auch bei dieser Verfahrensvariante eine direkte Erprobung oder ein Einsatz des Bauteils unter betriebsmäßigen oder gar extremen Testbedingungen nicht möglich.

Ausgehend von dem eingangs angegebenen Stand der Technik sowie der vorstehend aufgeführten Problematik, die sich bei herkömmlichen Verfahren ergibt, liegt der vorliegenden Erfindung die Aufgabe zugrunde, Formkörper, insbesondere Prototypen eines Produkts oder Bauteils, zu schaffen, die ein Testen unter Bedingungen, die mindestens denjenigen entsprechen, denen das Serienprodukt ausgesetzt werden soll, ermöglichen, wobei diese Prototypen in ihrer Festigkeit und Dichte dem Endprodukt mindestens angenähert werden sollen und insbesondere auch keine aufwendigen Nachbearbeitungsschritte erfordern.

Diese Aufgabe wird ausgehend von dem eingangs genannten Verfahren gemäß der Erfindung dadurch gelöst, daß das metallische Werkstoffpulver als bindemittel- und flußmittelfreies, metallisches Werkstoffpulver aufgebracht wird, daß es durch den Laserstrahl auf Schmelztemperatur erhitzt wird, daß die Energie des Laserstrahls so ausgewählt wird, daß das metallische Werkstoffpulver an der Auftreffstelle des Laserstrahls über seine gesamte Schichtdicke vollständig aufgeschmolzen wird, daß der Laserstrahl in mehreren Spuren über den vorgegebenen Bereich der Werkstoffpulverschicht so geführt wird, daß jede folgende Spur des Laserstrahls die vorherige Spur teilweise überlappt, und daß eine Schutzgasatmosphäre über jeder Wechselwirkungszone von Laserstrahl mit dem metallischen Werkstoffpulver aufrechterhalten wird.

Dadurch, daß das metallische Werkstoffpulver bindemittel- und flußmittelfrei ist, und es jeweils auf seine Schmelztemperatur erhitzt wird, wird das metallische Werkstoffpulver über die gesamte Schichtdicke vollständig aufgeschmolzen, so daß ein sehr dichter Formkörper hoher Festigkeit herstellbar ist, der ein Testen unter betriebsmäßigen Bedingungen, also sowohl unter hohen Temperaturen, in Abhängigkeit von der Metallart, aus der das verwendete Pulver besteht, als auch unter hohen mechanischen Beanspruchungen zuläßt. Hierbei ist wesentlich, daß die metallische Werkstoffpulverschicht entlang der Spuren, die der Laserstrahl beim Aufschmelzen überfährt, bis zu der darunterliegenden, bereits aufgeschmolzenen Schicht durchdringt, so daß sich jeweils benachbarte Spuren derart überlappen, daß benachbarte Bereiche miteinander verschmolzen werden und somit keine Rillen oder sonstige Übergangsstellen entstehen. Durch diese Überlappung wird die Schmelze des Pulvers und die Schmelze der angrenzenden, festen Kontur, die zuvor aufgeschmolzen wurde oder unter der Pulverschicht liegt, zu einem gemeinsamen Schmelzbad aufgeschmolzen, wonach das Schmelzbad eine schmelzmetaliurgische Verbindung eingeht und dann nach der Erstarrung eine homogene Struktur entsteht.

Hierbei ist auch wesentlich, daß während des Verfahrens in der Wechselwirkungszone zwischen dem Laserstrahl und dem metallischen Werkstoffpulver eine Schutzgasatmosphäre aufrechterhalten wird, um Fehlstellen, wie sie beispielsweise durch Oxidation hervorgerufen werden, zu vermeiden. Mit dem erfindungsgemäßen Verfahren können nicht nur hoch feste und sehr dichte Bauteile erzeugt werden, sondern es ist mit dem Verfahren auch, praktisch materialunabhängig, die Möglichkeit gegeben, die unterschiedlichsten metallischen Werkstoffpulver einzusetzen, beispielsweise Edelstahl, Aluminium oder Titan, um einige der wesentlichsten dieser seriennahen und im Vergleich zu bisherigen Sinterwerkstoffen hochschmelzenden Werkstoffe zu nennen, die heute eingesetzt werden. Die Pulver erfordern keine Vorbehandlungen, sondern es können handelsübliche Pulver ohne große Einschränkungen verwendet werden. Die einzige Einschränkung, die eingehalten werden muß, ist diejenige, daß das metallische Werkstoffpulver eine ausreichend feine Körnung haben sollte, um die einzelnen Schichten fein abgestuft aufbauen zu können.

Wie bereits vorstehend ausgeführt, ist es wesentlich, daß der Spurabstand benachbarter Spuren, d.h. der Abstand, mit dem jeweils durch den Laserstrahl aufgeschmolzen wird, so gewählt wird, daß sich die Spuren derart überlappen, daß eine folgende Schmelzspur jeweils an die vorherige Spur angeschmolzen wird, indem eine ausreichend breite Zone, auch von der bereits erstarrten Spur erneut aufgeschmolzen wird. In Bezug auf diese Maßnahme hat sich ein Spurabstand Δyₛ benachbarter Spuren gemäß der Vorschrift 2 > dₛ/Δyₛ > 1,5 als bevorzugt erwiesen, wobei dₛ der Durchmesser des Laserstrahls in der Schmelzebene ist. Weiterhin sollte der Durchmesser des Laserstrahls im Bereich von 0,2 bis 0,5 mm, vorzugsweise etwa 0,35 mm, liegen. Geht man von einem Laserstrahldurchmesser von beispielsweise von 0,5 mm aus und berücksichtigt die Bedingung, wie sie vorstehend angegeben ist, so überlappt jeweils der Laserstrahl mit 0,25 mm seines Durchmessers die bereits erstarrte, vorherige Spur, die dann wieder aufgeschmolzen wird.

Es hat sich gezeigt, daß ein besonders gutes Aufschmelzen und Verbinden des aufgeschmolzenen Metallpulvers mit einer bereits erstarrten und wieder aufgeschmolzenen Spur dann erzielt wird, wenn die benachbarte, erstarrte Spur noch eine ausreichende Restwärme besitzt, so daß sie schneller auf die Schmelztemperatur durch den Laserstrahl wieder aufgeheizt werden kann. Um dies zu erreichen, wird jede Schicht des schichtartigen Aufbaus des Formkörpers in Teilflächen unterteilt und jede Teilfläche wird dann wiederum in Abtastvektorlängen unterteilt, die der Laserstrahl nacheinander überstreicht. Dies bedeutet, daß sich der Laserstrahl nur eine kurze Spurlänge in einer Richtung bewegt und dann seine Richtung umkehrt, um neben der zuvor aufgeschmolzenen Pulverschicht zurückzukehren. Durch diese Umkehrfolge wird unmittelbar dort der Laserstrahl entlanggeführt, wo das aufgeschmolzene und verfestigte Pulvermaterial noch stark aufgewärmt ist. Eine solche maximale Abtastvektorlänge sollte auf 20 mm, vorzugsweise auf maximal 10 mm, eingestellt werden, d.h. der Laser überstreicht nur eine sehr kurze Strecke, bevor er seine Richtung umkehrt, um parallel zu seiner letzten Spur abzutasten. Eine solche Unterteilung jeder Schicht in einzelne Teilflächen und diese wiederum in einzelne Abtastvektorzonen einer vorgegebenen Länge kann im Rahmen der Datenverarbeitung durchgeführt werden, d.h. ein Datenverarbeitungssystem unterteilt die Flächen derart, daß der Laserstrahl keine Sprünge in der Schmelzebene vornehmen muß, sondern fortlaufend die gesamte Schicht nach und nach durchläuft, um möglichst optimiert die Restwärme, die in den bereits aufgeschmolzenen Schichten noch verblieben ist, zu nutzen.

Weiterhin sollte bevorzugt beachtet werden, daß die maximale Abtastvektorlänge kleiner ist als die Breite der Teilfläche in Abtastrichtung des Laserstrahls, d.h. der Laserstrahl tastet quer zu seiner Abtastrichtung lange, streifenförmige Teilflächen der Pulverschicht ab und schmilzt diese Bereiche auf.

Um die Einkopplung des Laserstrahls in die Pulverschicht zu unterstützen, sollte der Laserstrahl unter einem Winkel zur Flächennormalen der Pulverschicht, vorzugsweise unter einem Winkel von etwa 45°, eingestrahlt werden. Durch diese Maßnahme erfolgt eine tiefere Eindringung des Laserstrahls bei gleicher Laserleistung in das metallischen Werkstoffpulver, als dies der Fall wäre, wenn der Laserstrahl parallel zur Flächennormalen der Pulverschicht eingestrahlt würde.

Um das Pulver gleichmäßig aufzuschmelzen derart, daß jeweils ausreichende Zonen des bereits erstarrten Metalls erneut aufgeschmolzen werden, um eine übergangslose Verbindung zu schaffen, werden die Metallpulverschichten vorzugsweise in einer Dicke zwischen 0,05 mm und 0,02 mm aufgebracht, mit einer bevorzugten Dicke von etwa 0,1 mm.

Die Abtastgeschwindigkeit des Laserstrahls sollte auf einen Wert zwischen 50 und 150 mm/s, vorzugsweise auf etwa 150 mm/s, eingestellt werden.

Die Körnung des metallischen Werkstoffpulvers sollte unterhalb 100 µm liegen mit einer bevorzugten, durchschnittlichen Korngröße der Körnung von 10 bis 50 µm.

Für die Energiedichte im Schmelzbereich sollten Werte zwischen 1 bis 3 J/mm² eingehalten werden; mit diesen Energiedichten werden gute Ergebnisse in Bezug auf Metalle, wie Stahl, Titan und Aluminium, erhalten.

Die Verbindung der Schmelzen der festen Kontur und der Schmelzen des Pulvers wird oft durch Oxidationsschichten und Verunreinigungen auf der Oberfläche der Schmelzen verhindert. Deshalb sollte durch eine geeignete Schutzgasführung die Oxidation der Schmelze, insbesondere durch den Luftsauerstoff, vermieden werden, sowie Verunreinigungen aus der Atmosphäre um die Bearbeitungszone herum entfernt werden. Dazu wird während des Aufschmelzens des metallischen Werkstoffpulvers über der Oberfläche des sich aufbauenden Formkörpers eine laminare Schutzgasströmung aufrechterhalten. Als Schutzgas kann zum Beispiel Stickstoff, Helium oder Argon verwendet werden. Eine ausreichende Strömung ist erforderlich, um nicht nur die sich im Bereich der Oberfläche befindlichen Gase, die eine Oxidation der entsprechenden Metalloberflächen bewirken könnten, sondern auch solche Gase, die in den Hohlräumen zwischen dem metallischen Werkstoffpulver eingelagert sind, zu entfernen. Diese Gase werden dann ständig mit dem vorbeiströmenden Schutzgas abtransportiert, insbesondere auch dann, wenn diese Gase durch die Erwärmung des metallischen Werkstoffpulvers freigesetzt werden. Die laminare Strömung hat weiterhin den Vorteil, daß das metallische Werkstoffpulver im Pulverbett nicht aufgewirbelt wird, was sich nachteilig auf den Aufbau des Formkörpers auswirken könnte. Um den gesamten Bereich des aufzubauenden Formkörpers mit Schutzgasen abzudecken, wird vorzugsweise das Schutzgas von der einen Seite des Formkörpers zugeführt und auf der anderen Seite, und zwar der gegenüberliegenden Seite des Formkörpers, abgeführt. Um den Schutzgasvolumenstrom einerseits zu begrenzen und andererseits die laminare Strömung zu definieren, wird das Schutzgas in einem eng begrenzten Volumen oberhalb des aufzubauenden Formkörpers, vorzugsweise in einem Bereich von maximal 20 mm oberhalb des Formkörpers, aufrechterhalten. Das Schutzgas sollte unter einem Überdruck von größer 0,1 Mpa, vorzugsweise im Bereich von 0,2 bis 0,6 MPa, gehalten werden. Gegebenenfalls besteht auch die Möglichkeit, die Schutzgasströmung im Bereich der jeweiligen Aufschmelzstelle mittels einer Düse aufrechtzuerhalten; eine solche Düse kann dann mit der Bewegung des Laserstrahls oder von Teilfläche zu Teilfläche mitgeführt werden; es besteht auch die Möglichkeit, innerhalb der Teilfläche quer zu der Abtastvektorrichtung zu verfahren.

Weitere Einzelheiten und Merkmale des erfindungsgemäßen Verfahrens sowie eine Vorrichtung zur Durchführung des Verfahrens ergeben sich aus der nachfolgenden Beschreibung von Ausführungsbeispielen anhand der beigefügten Zeichnungen. In der Zeichnung zeigt
- Figur 1: eine schematische Darstellung einer Vorrichtung zum Herstellen eines Formkörpers gemäß dem erfindungsgemäßen Verfahren,
- Figur 2: eine schematische Darstellung des Spurabstands des Laserstrahls in einer Draufsicht, wobei ein Teil der Pulverschicht aus metallischem Werkstoffpulver aufgeschmolzen ist, während im Bereich des anderen Teils die Metallpulverkörnung sichtbar ist,
- Figuren 3A bis 3C: drei aufeinanderfolgende Darstellungen der Erzeugung einer schmelzmetallurgischen Verbindung zwischen einer festen Kontur und aufgeschmolzenem Pulver,
- Figur 4: ein Bauteil, bei dem eine Teilfläche des Bauteils in Abtastvektorlängen für den Laserstrahl unterteilt ist,
- Figur 5: einen Querschliff eines gemäß dem erfindungsgemäßen Verfahren hergestellten Probeteils aus Edelstahl,
- Figur 6A: eine schematische Seitenansicht einer Vorrichtung, um die Gasströmung in der Prozeßkammer zu erläutern,
- Figur 6B: eine Draufsicht auf die Vorrichtung der Figur 6A,
- Figur 7A: eine der Figur 6A entsprechende Vorrichtung, bei der eine Gasströmung mit einer Gasdüse erzeugt wird, und
- Figur 7B: eine Draufsicht auf die Vorrichtung der Figur 7A.

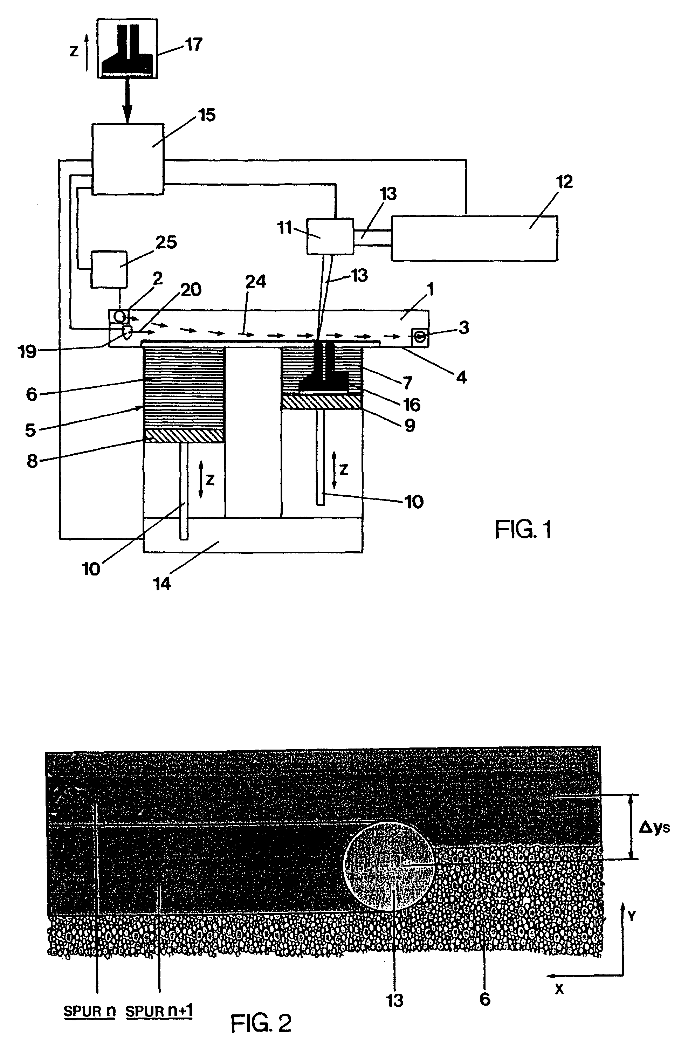

Die Vorrichtung, die zur Durchführung des erfindungsgemäßen Verfahrens eingesetzt wird, umfaßt, wie in Figur 1 dargestellt ist, eine Prozeßkammer 1 mit einem Schutzgaseinlaß 2, der im Bereich der oberen Seitenkante der Prozeßkammer 1 angeordnet ist, sowie einen Schutzgas-Auslaß 3 an der gegenüberliegenden Kante, der im Bereich der Bodenfläche 4 der Prozeßkammer 1 angeordnet ist. Der Bodenfläche 4 der Prozeßkammer 1 ist zum einen ein Vorratsbehälter 5, der mit metallischem Werkstoffpulver 6 gefüllt ist, sowie eine Aufbaukammer 7 zugeordnet. In jeder Kammer 5, 7 ist jeweils ein Hubtisch 8, 9 angeordnet, die über jeweils einen Hubkolben 10 in Richtung der Doppelpfeile in der z-Richtung bewegbar sind. Oberhalb der Prozeßkammer 1 im Bereich der Aufbaukammer 7 ist eine Abtasteinrichtung 11 angeordnet, die eine von einem Laser 12 erzeugten Laserstrahl 13 auf den Hubtisch 9 hin richtet. Der Laser 12, die Abtasteinrichtung 11, eine Pumpe 25 für die Schutzgaszufuhr zu dem Schutzgas-Einlaß 2 sowie eine Antriebseinrichtung 14 für die beiden Hubkolben 10 sind über jeweilige Steuerleitungen, die nicht mit einem Bezugszeichen versehen sind, einer zentralen Verarbeitungseinheit 15 zugeordnet.

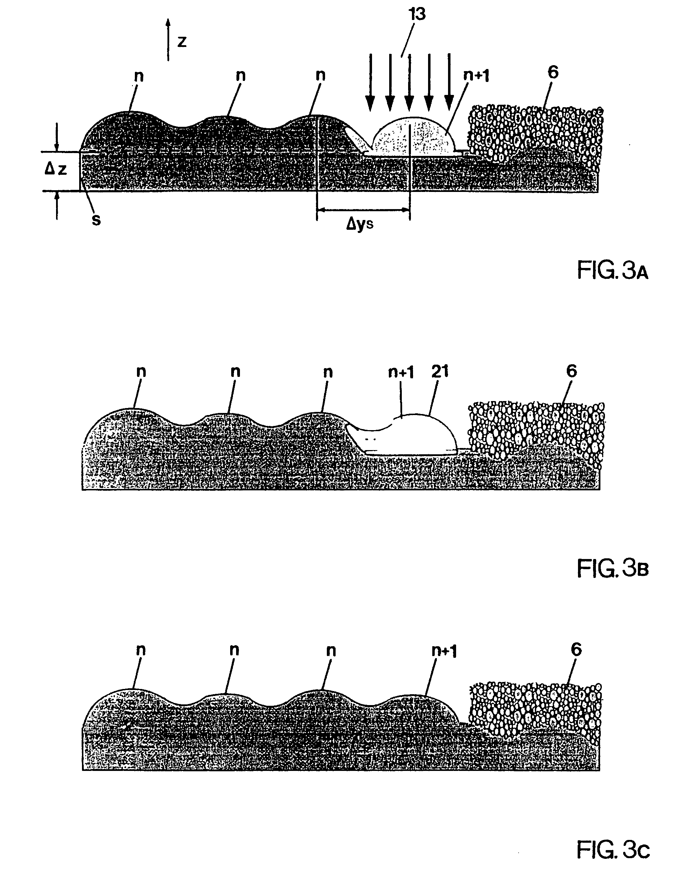

Um einen Formkörper, beispielsweise den Prototyp, eines Bauteils 16 herzustellen, werden zunächst über eine Eingabeeinheit 17 die Bauteilkoordinaten in die zentrale Verarbeitungseinheit 15 dreidimensional eingegeben, und zwar in einzelne, in z-Richtung unterteilte Schnitte. Die Schnitte sind in der z-Richtung durch das Bauteil 16 unter einer Beabstandung von 0,1 mm gelegt, so daß sich beispielsweise für ein Bauteil mit einer Bauhöhe in z-Richtung von 10 cm 1000 Schnitte ergeben. Nachdem die Bauteildaten entsprechend aufbereitet sind, wird der Hubtisch 9 in der Aufbaukammer 7 in eine erste, obere Stellung verfahren, in der die Auflagefläche 18 auf das Niveau der Bodenfläche 4 verfahren ist. Der Hubtisch 8 des Vorratsbehälters 5 wird in die untere Position verfahren, beispielsweise in eine Position, wie sie in Figur 1 gezeigt ist, und in den Vorratsbehälter 5 wird ein feinkörniges Pulver 6 aus dem Metall eingefüllt, aus dem das Bauteil 16 aufgebaut werden soll. Die Körnung des Pulvers 6 sollte im Bereich von 10 - 100 µm liegen, wobei die exakte Korngröße von den Bauteil-Vorgaben abhängig ist. Über eine Nivelliereinrichtung 19, in Figur 1 schematisch mit einem Pfeil dargestellt, wird das metallische Werkstoffpulver 6, das über die Bodenfläche 4 hinaus mittels des Hubtischs 8 angehoben ist, über die Bodenfläche 4 der Prozeßkammer 1 verteilt, indem diese Nivelliereinrichtung 19 in Richtung des Pfeils 20 verfahren wird, um so eine dünne Schicht an metallischem Werkstoffpulver, wie oberhalb der Bodenfläche 4 zu sehen ist, zu verteilen. Die Nivelliereinrichtung 19, die ebenfalls mit der zentralen Verarbeitungseinheit 15 in Verbindung steht, wird in einem Abstand oberhalb der Bodenfläche 4 angehoben, die einer aufzubauenden Schicht des Bauteils 16 entspricht. Wie ersichtlich ist, ist oberhalb des Hubtisches 9 dann ebenfalls eine dünne Pulverschicht aufgebracht. Nachdem diese vorbereitende Maßnahme abgeschlossen ist, werden der Laser 12 und die Abtasteinrichtung 11 angesteuert, um den Laserstrahl 13 auf die Auflagefläche 18 bzw. das darauf befindliche metallische Werkstoffpulver zu richten, um, entsprechend den Koordinaten, dasjenige Pulver aufzuschmelzen, das der untersten Schicht des Bauteils 16 entspricht. Hierbei wird der Laserstrahl 13, wie in Figur 2 gezeigt ist, entlang aufeinanderfolgender Spuren n in der x-Richtung verfahren, um das metallische Werkstoffpulver 6 aufzuschmelzen, wie auch in Figur 3A gezeigt ist. Nachdem die unterste Schicht s des Bauteils 16 gebildet ist, wird der Hubtisch 9 um einen Abstand Δz nach unten verfahren, so daß die Oberseite dieser ersten Schicht S wiederum in etwa der Ebene der Bodenfläche 4 der Prozeßkammer 1 liegt. Danach wird wiederum die Nivelliereinrichtung 19 betätigt, um eine definierte Pulverschicht auf die darunterliegende Schicht S des Bauteils 16 aufzutragen. Danach wird der Laserstrahl 13 wieder Spur für Spur n entsprechend den Bauteilkoordinaten über das Pulver geführt, um dieses aufzuschmelzen. Hierbei wird nicht nur das metallische Werkstoffpulver aufgeschmolzen, sondern auch die darunterliegende Oberfläche der Schicht S sowie die jeweils benachbarte Spur, d.h. in Figur 2 überstreicht der Laserstrahl 13, der entlang der Spur n + 1 verfährt, auch die Spur n. Hierbei sollte der Laserstrahl, um das verfestigte Metall der angrenzenden Spur aufzuschmelzen, mit mindestens einem Drittel seines Durchmessers auch die vorherige Spur n überstreichen. Hierbei wird die Spur n angeschmolzen, wie in Figur 3A dargestellt ist, sowie die darunterliegende Schicht S, so daß unterhalb des Laserstrahls ein Schmelzbereich, in Figur 3B mit dem Bezugszeichen 21 bezeichnet, gebildet wird. Das aufgeschmolzene Pulver 6 verfestigt sich dann, wie in Figur 3C dargestellt ist, mit dem Metall in der vorherigen Spur n zu einer homogenen Schicht. Diese Verfahrensweise wird wiederholt, bis das gesamte Bauteil 16 aufgebaut ist. Es ist ersichtlich, daß nicht nur zusammenhängende Flächen jeweils aufgebaut werden können, sondern auch dünne Stege, wie anhand des Bauteils 16 angedeutet ist.

Der Laserstrahl 13 sollte von der vorherigen Spur n, parallel zu der er verschwenkt wird, der Vorschrift 2 > dₛ/Δyₛ > 1,5 genügen, wobei dₛ der Durchmesser des Laserstrahls ist und Δyₛ der mittlere Spurabstand benachbarter Spuren bezeichnet. Bei einem Strahldurchmesser dₛ = 0,35 mm beträgt der Spurabstand Δyₛ etwa 0,2 mm.

Typische Energiedichten, die mit dem Laserstrahl 13 auf das metallische Werkstoffpulver 6 aufgebracht werden, um dieses vollständig aufzuschmelzen, liegen beispielsweise bei der Verarbeitung von Edelstahl im Bereich von 2 J/mm²; diese Energiedichte kann zum Beispiel mit einer typischen Laserleistung von ca. 100 W, einem Strahidurchmesser von ca. 0,3 bis 0,4 mm, einer Abtastgeschwindigkeit in Richtung der Achse x in Figur 2 von ca. 140 mm/s und einer Pulverschichtdicke Δz von 0,1 mm erreicht werden.

Geeignete Laser für das Verfahren sind, in Abhängigkeit von den Strahlungsabsorptionseigenschaften des eingesetzten Pulvers, Nd:YAG-Laser, CO₂-Laser und Diodenlaser.

Es hat sich gezeigt, daß die Absorption der Laserstrahlung 13 im metallischen Werkstoffpulver 6 wesentlich effizienter wird, wenn die Laserstrahlung 13 unter einem Winkel, vorzugsweise unter einem Winkel von etwa 45°, zu der Flächennormalen der Pulverschicht eingestrahlt wird, da durch die schräge Strahlinzidenz die Laserstrahlung tiefer in die Pulverschicht eingekoppelt werden kann in Bezug auf diesen Winkel kann ein beliebiger Raumwinkel gewählt werden.

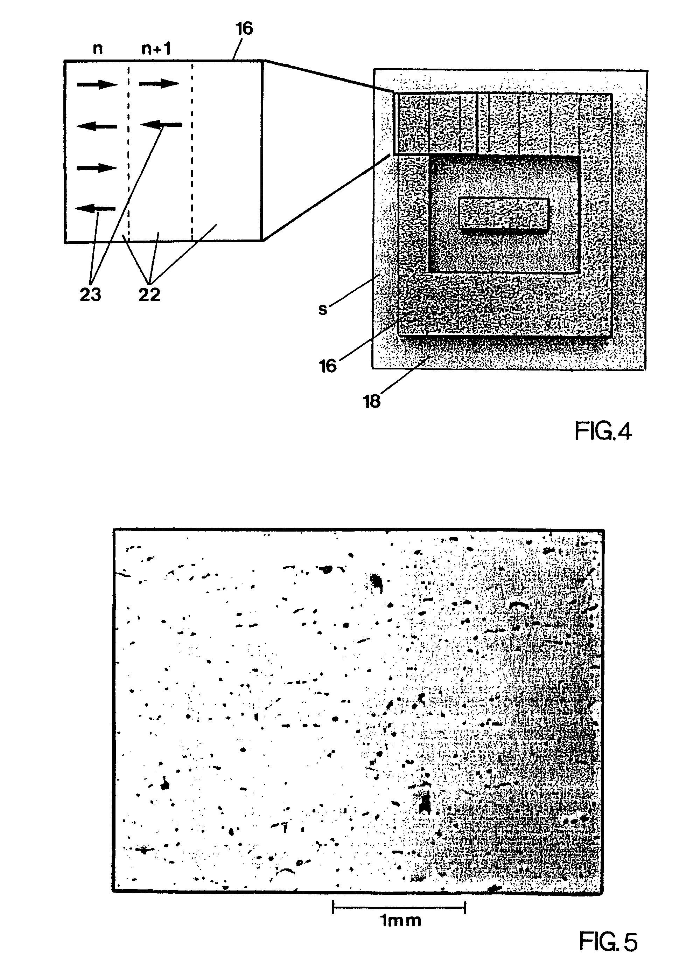

Eine wesentliche Maßnahme, um das metallische Werkstoffpulver homogen, auch in Bezug auf die angrenzende Spur n und die darunterliegende Schicht s, aufzuschmelzen, ist der vorstehend erläuterte Spurversatz benachbarter Spuren n und n + 1. Hierbei trifft ein Teil des Laserstrahls 13 auf das Pulver 6 auf, während ein anderer Teil auf die feste Kontur der vorher bearbeiteten Spur n auftrifft. Der Anteil der Laserstrahlung 13, die auf die relativ glatte, schon feste Kontur der benachbarten Spur auftrifft, wird zu einem größeren Teil reflektiert, als derjenige Teil, der auf das Pulver auftrifft, das aufgeschmolzen werden soll. Damit der geringe, absorbierte Teil der Laserstrahlung dennoch ausreicht, die feste Kontur an der Oberfläche der benachbarten Spur n aufzuschmelzen, sollte die Temperatur der schon festen Kontur noch möglichst hoch sein, wenn die Laserstrahlung 13 darauf auftrifft. Dies wird dadurch erreicht, daß die Abtastvektorlänge begrenzt wird, d.h. der Laser wird nur einen relativ kurzen Weg entlang einer Spur n verfahren, bevor die nächste Spur n + 1 überstrichen wird. Bei langen Abtastvektoren vergeht nämlich eine bestimmte Zeit, bis eine Spur n + 1 bearbeitet ist. In dieser Zeit kann die gerade bearbeitete Spur n abkühlen. Wird dann die nächste Spur bearbeitet, ist die bereits bearbeitete Spur soweit abgekühlt, daß die darauf auftreffende Laserstrahlung nicht ausreichen kann, diese wieder anzuschmelzen. Wird die Abtastvektorlänge kurz gestaltet, verkürzt sich auch die Zeit, in der die gerade bearbeitete Spur abkühlen kann. Deshalb hat die Spur noch eine hohe Temperatur, wenn die nächste Spur, die unmittelbar benachbart der gerade bearbeiteten Spur ist, abkühlen kann. Dadurch reicht die darauf auftreffende Laserstrahlung aus, um die Oberfläche der schon festen Spur anzuschmelzen und die Schmelze des Pulvers kann sich damit verbinden, wie dies auch in den Figuren 3A bis 3C dargestellt ist. Unter den Parametern, die vorstehend angegeben sind, würde die maximale Abtastvektorlänge ca. 10 mm betragen. Zum Aufbau komplexer Geometrien wird eine Software benutzt, die jede Schicht s eines Bauteils in Teilflächen 22 zerlegt, wie in Figur 4 dargestellt ist, die dann entsprechend den angedeuteten Abtastvektoren 23 Spur n für Spur n hin und her durch den Laserstrahl 13 überstrichen werden, wobei vorzugsweise unmittelbar am Ende eines Abtastvektors 23 die Richtung des Laserstrahls umgekehrt wird, um entlang des nächsten Abtastvektors 23 zu verfahren.

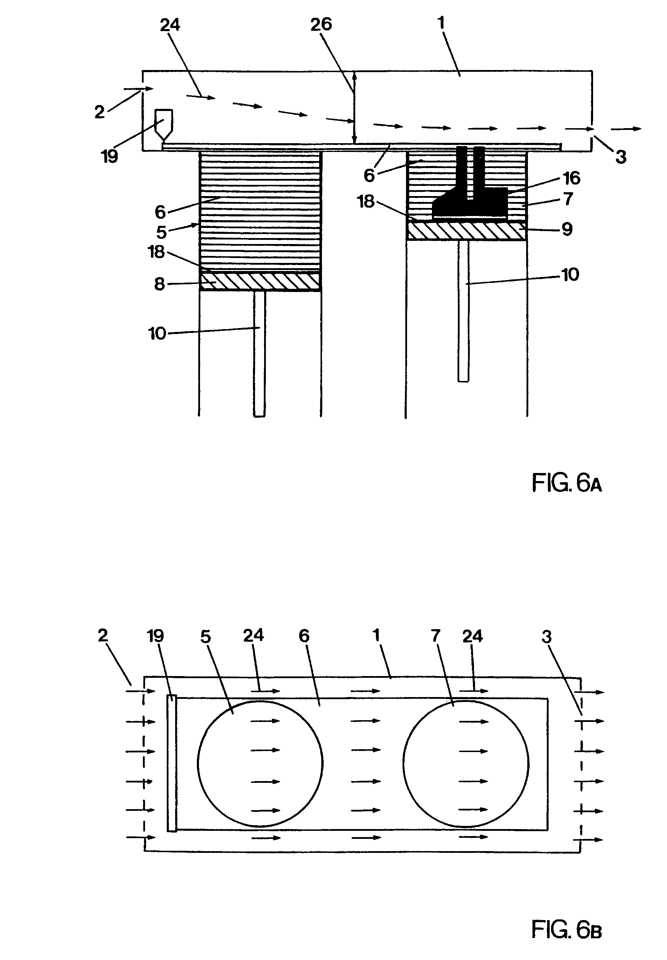

In Figur 5 ist ein Schliffbild eines nach dem erfindungsgemäßen Verfahren hergestellten Edelstahl-Bauteils gezeigt. Anhand der Figur 5 ist zu erkennen, daß ein sehr homogener und dichter Körper gebildet ist mit nur sehr geringen Einschlüssen; die Dichte des Bauteils liegt bei etwa 99% der theoretischen Materialdichte.

Ein Problem, das beim Aufschmelzen der festen Kontur und des Pulvers auftreten kann, sind Oxidationen an der Oberfläche der Materialien, die einem solchen Aufschmelzen entgegenwirken. Aus diesem Grund wird über der Oberseite der Aufbaukammer 7 eine laminare Schutzgasströmung 24 erzeugt, wie durch die entsprechenden Pfeile in den Figuren 6A und 6B angedeutet ist. Dazu wird als Schutzgas zum Beispiel Stickstoff, Helium oder Argon über den Schutzgas-Einlaß 2, der in dem Fall der Figuren 6A und 6B schlitzförmig an der Querseite der Prozeßkammer 1 im oberen Bereich verläuft, zugeführt und auf der gegenüberliegenden Seite über den schlitzförmigen Schutzgas-Auslaß 3, im unteren Bereich, der nahe zu der Bodenfläche 4 der Prozeßkammer 1 liegt, abgesaugt, und zwar über die Pumpeinrichtung 25. Aufgrund des tiefliegenden Schutzgas-Auslasses 3 nahe zu der Bodenfläche 4 wird die Schutzgasströmung 24 sehr dicht über die Oberseite der Aufbaukammer 7 geführt. Hierdurch wird nicht nur oberhalb der Pulverschicht, die durch den Laserstrahl 13 aufgeschmolzen werden soll, eine reine Schutzgasatmosphäre aufrechterhalten, sondern es wird auch Luft, die in den Hohlräumen zwischen den Pulvern zurückgehalten wird, abgeführt. Um den Volumenstrom des Schutzgases gering zu halten, sollte die Prozeßkammer 1 sehr flach ausgebildet sein, d.h. sie hat eine Höhe 26 von nicht mehr als 20 mm. Ein typischer Volumenstrom des Schutzgases beträgt etwa 60 l/min; der Druck in diesem Bereich sollte zwischen 0,2 und 0,6 MPa liegen.

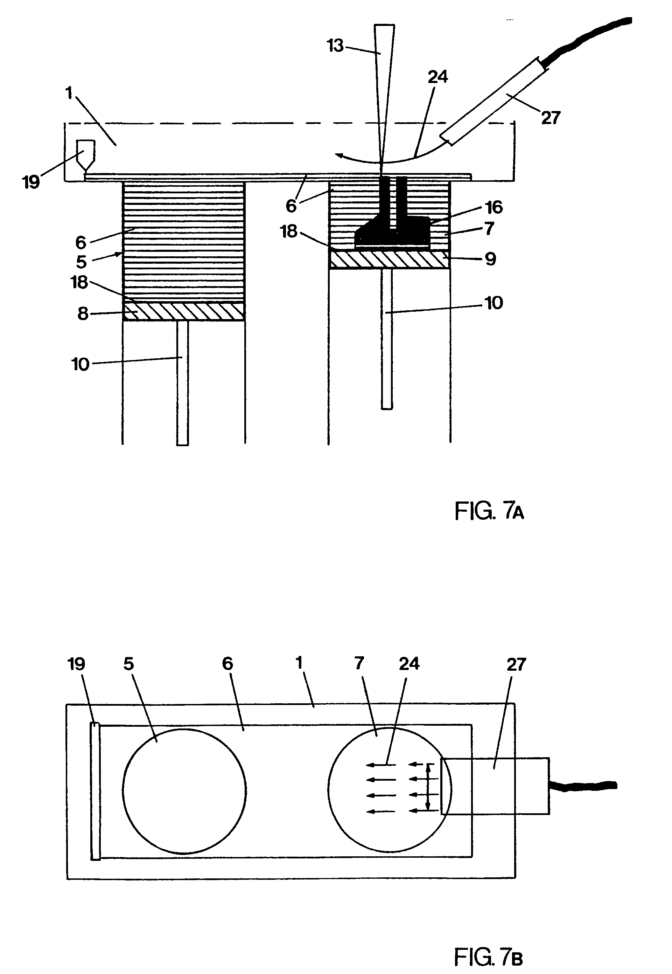

Alternativ zu der Anordnung der Figuren 6A und 6B, um die laminare Schutzgasströmung oberhalb der Aufbaukammer 7 aufrechtzuerhalten, kann der Aufbau so modifiziert werden, wie dies in den Figuren 7A und 7B zu sehen ist. In dieser alternativen Ausführungsform wird die Schutzgasströmung 24 über eine Düse 27 auf die Aufschmelzstelle gerichtet. Diese Düse 27 erzeugt eine lokal begrenzte Schutzgasströmung 24 an der Aufschmelzstelle. Um den gesamten Bereich, über den das Pulver 6 aufgeschmolzen wird, mit Schutzgas anzuströmen, wird die Düse 27 mit dem Laserstrahl 13 jeweils mitbewegt. Falls die Breite der Düse größer als die maximale Abtastvektorlänge 23 ist, dann wird die Düse 27 innerhalb einer Teilfläche 22 nur senkrecht zu der Abtastrichtung mitbewegt, da parallel zu der Abtastrichtung der Aufschmelzbereich vollständig abgeschirmt wird. Auch auf diese Weise kann eine effektive, laminare Strömung unmittelbar oberhalb des mit dem Laserstrahl 13 gerade aufgeschmolzenen Bereichs erzielt werden, so daß eine Oxidation der Oberflächen, sowohl des Pulvers als auch der angrenzenden, bereits aufgeschmolzenen Flächen, unterbunden wird.

## Patentansprüche

1. Verfahren zur Herstellung eines Formkörpers, insbesondere eines Prototyps eines Produkts oder Bauteils, eines Werkzeugprototyps oder eines Ersatzteils, entsprechend dreidimensionalen CAD-Daten eines Modells des Formkörpers durch schichtweises Aufbauen aus pulverförmigem, metallischem Werkstoff, bei dem nacheinander mehrere Pulverschichten übereinander aufgebracht werden, wobei jede Pulverschicht vor dem Aufbringen der nächstfolgenden Puiverschicht mit einem fokussierten Laserstrahl in einem vorgegebenen Bereich, der einem ausgewählten Querschnittsbereich des Modells des Formkörpers entspricht, auf eine vorgegebene Temperatur erhitzt wird und bei dem der Laserstrahl jeweils entsprechend den CAD-Querschnittsdaten des ausgewählten Querschnittsbereichs des Modells über die jeweilige Pulverschicht geführt wird, wodurch diese Pulverschicht an der darunterliegenden Schicht fixiert wird, **dadurch gekennzeichnet**, daß das metallische Werkstoffpulver als bindemittelund flußmittelfreies metallisches Werkstoffpulver aufgebracht wird, daß es durch den Laserstrahl auf Schmelztemperatur erhitzt wird, daß die Energie des Laserstrahls so ausgewählt wird, daß das metallische Werkstoffpulver an der Auftreffstelle des Laserstrahls über seine gesamte Schichtdicke vollständig aufgeschmolzen wird, daß der Laserstrahl in mehreren Spuren über den vorgegebenen Bereich der Werkstoffpulverschicht so geführt wird, daß jede folgende Spur des Laserstrahls die vorherige Spur teilweise überlappt, und daß eine Schutzgasatmosphäre über der Wechselwirkungszone von Laserstrahl mit dem metallischen Werkstoffpulver aufrechterhalten wird.

2. Verfahren nach Anspruch 1, **dadurch gekennzeichnet**, daß ein Spurabstand Δyₛ benachbarter Laserstrahlen gemäß der Vorschrift 2 > dₛ/Δyₛ > 1,5 eingehalten wird, wobei dₛ der Durchmesser des Laserstrahls in der Schmelzebene ist .

3. Verfahren nach Anspruch 2, **dadurch gekennzeichnet**, daß der Durchmesser des Laserstrahls im Bereich von 0,2 bis 0,5 mm, vorzugsweise maximal 0,35 mm, eingestellt wird.

4. Verfahren nach Anspruch 3, **dadurch gekennzeichnet**, daß der Durchmesser des Laserstrahls auf maximal 0,35 mm eingestellt wird.

5. Verfahren nach Anspruch 3, **dadurch gekennzeichnet**, daß jede Schicht des schichtartigen Aufbaus in Teilflächen unterteilt wird, wobei jede Teilfläche wiederum in Abtastvektorlängen unterteilt wird, die der Laserstrahl nacheinander überstreicht.

6. Verfahren nach Anspruch 5, **dadurch gekennzeichnet**, daß die maximale Abtastvektorlänge auf 20 mm eingestellt wird.

7. Verfahren nach Anspruch 6, **dadurch gekennzeichnet**, daß die maximale Abtastvektorlänge auf etwa 10 mm eingestellt wird.

8. Verfahren nach Anspruch 5 oder 6, **dadurch gekennzeichnet**, daß die einzelnen Abtastvektorlängen von dem Laserstrahl mit einer Hin- und Herbewegung abgearbeitet werden.

9. Verfahren nach einem der Ansprüche 1 bis 8, **dadurch gekennzeichnet**, daß der Laserstrahl unter einem Winkel zur Flächennormalen der Pulverschicht eingestrahlt wird.

10. Verfahren nach Anspruch 9, **dadurch gekennzeichnet**, daß der Laserstrahl unter einem Winkel von etwa 45° zur Flächennormalen der Pulverschicht eingestrahlt wird.

11. Verfahren nach einem der Ansprüche 1 bis 10, **dadurch gekennzeichnet**, daß die jeweilige Pulverschicht aus metallischem Werkstoffpulver mit einer Dicke zwischen 0,05 mm und 0,2 mm aufgebracht wird.

12. Verfahren nach Anspruch 11, **dadurch gekennzeichnet**, daß die jeweilige Pulverschicht aus metallischem Werkstoffpulver mit einer Dicke von etwa 0,1 mm aufgebracht wird.

13. Verfahren nach einem der Ansprüche 1 bis 12, **dadurch gekennzeichnet**, daß die Abtastgeschwindigkeit des Laserstrahls auf einen Wert zwischen 50 und 250 mm/s eingestellt wird.

14. Verfahren nach Anspruch 13, **dadurch gekennzeichnet**, daß die Abtastgeschwindigkeit des Laserstrahls auf einen Wert von etwa 150 mm/s eingestellt wird.

15. Verfahren nach einem der Ansprüche 1 bis 14, **dadurch gekennzeichnet**, daß im Schmelzbereich eine Energiedichte im Bereich von 1 bis 3 J/mm² erzeugt wird.

16. Verfahren nach einem der Ansprüche 1 bis 15, **dadurch gekennzeichnet**, daß während des Aufschmelzens über der Oberfläche des sich aufbauenden Formkörpers eine Schutzgasströmung aufrechterhalten wird.

17. Verfahren nach einem der Ansprüche 1 bis 16, **dadurch gekennzeichnet**, daß das Schutzgas von der einen Seite des Formkörpers zugeführt und auf der anderen Seite des Formkörpers abgeführt wird.

18. Verfahren nach einem der Ansprüche 16 oder 17, **dadurch gekennzeichnet**, daß die Schutzgasströmung in einem eng begrenzten Volumen oberhalb des aufzubauenden Formkörpers aufrechterhalten wird.

19. Verfahren nach Anspruch 18, **dadurch gekennzeichnet**, daß die Schutzgasströmung in einem Bereich maximal 20 mm oberhalb des aufzubauenden Formkörpers aufrechterhalten wird.

20. Verfahren nach einem der Ansprüche 16 bis 19, **dadurch gekennzeichnet**, daß das Schutzgas unter einem Überdruck von größer 0,1 MPa gehalten wird.

21. Verfahren nach Anspruch 20, **dadurch gekennzeichnet**, daß das Schutzgas unter einem Überdruck von 0,2 bis 0,6 MPa gehalten wird.

22. Verfahren nach Anspruch 16, **dadurch gekennzeichnet**, daß die Schutzgasströmung im Bereich der jeweiligen Aufschmelzstelle mittels einer Düse aufrechterhalten wird, wobei die Düse mit der Bewegung des Laserstrahls mitgeführt wird.

23. Verfahren nach Anspruch 22, **dadurch gekennzeichnet**, daß das metallische Werkstoffpulver mit einer Körnung von < 100 µm aufgebracht wird.

## Claims

1. Method for manufacturing a molded body, particularly a prototype of a product or component, a tool prototype or spare part according with three-dimensional CAD data of a model of the molded body by depositing layers of a metallic material in powder form, whereby several layers of the powder are successively deposited one on top of the other, whereby each layer of powder is heated to a specified temperature by means of a focused laser beam applied to a given area corresponding to a selected cross-sectional area of the model of the molded body before depositing the next following powder layer and where the laser beam is guided over each layer of powder in accordance with the CAD cross-sectional data of the selected cross-sectional area of the model in such a way that each layer of powder is fixed to the layer below, **characterized in that** the metallic material in powder form is applied in the form of a metallic powder free of binding and fluxing agents, that it is heated by the laser beam to melting temperature, that the energy of the laser beam is chosen in such a way that the layer of metallic powder is fully molten throughout its layer thickness at the point of impact of said laser beam, that the laser beam is guided across the specified area of powder in several runs in such a way that each following run of the laser beam partly overlaps the preceding run, and that a protective gas atmosphere is maintained above the interaction zone of the laser beam and the atmosphere is maintained above the interaction zone of the laser beam and the metallic powder.

2. Method according to claim 1, **characterized in that** a run distance Δyₛ of neighboring laser beams is maintained according to the formula 2 > dₛ/Δyₛ > 1.5, where d₂ is the diameter of the laser beam in the plane of the melt.

3. Method according to claim 2, **characterized in that** the diameter of the laser beam is set to between 0.2 and 0.5 mm, preferably to a maximum of 0.35 mm.

4. Method according to claim 3, **characterized in that** the diameter of the laser beam is set to a maximum of 0.35 mm.

5. Method according to claim 3, **characterized in that** each layer of the layer-like structure is divided into partial areas, whereby each partial area in turn is divided into scanning vector lengths that the laser beam sweeps successively.

6. Method according to claim 5, **characterized in that** the maximum scanning vector length is set to 20 mm.

7. Method according to claim 5, **characterized in that** the maximum scanning vector length is set to approximately 10 mm.

8. Method to claim 5 or 6, **characterized in that** the individual scanning vector lengths are processed by the laser beam in a back and forth motion.

9. Method according to one of the claims 1 to 8, **characterized in that** the laser beam is applied at an angle to the surface normal of the powder layer.

10. Method according to claim 9, **characterized in that** the laser beam is applied at an angle of about 45° to the surface normal of the powder layer.

11. Method according to one of the claims 1 to 10, **characterized in that** the respective powder layer made of metallic powder material is applied at a thickness between 0.05 mm and 0.2 mm.

12. Method according to claim 11, **characterized in that** the respective powder layer made of metallic powder material is applied at a thickness of about 0.1mm.

13. Method according to one of the claims 1 to 12, **characterized in that** the scanning speed of the laser beam is set to a value between 50 and 250 mm/sec.

14. Method according to claim 13, **characterized in that** the scanning speed of the laser beam is set to a value of about 150 mm/sec.

15. Method according to one of the claims 1 to 14, **characterized in that** an energy density between 1 and 3 J/mm² is generated in the melt area.

16. Method according to one of the claims 1 to 15, **characterized in that** a protective gas stream is maintained across the surface of the molded body while the metallic powder material is molten to build the molded body.

17. Method according to one of the claims 1 to 16, **characterized in that** the protective gas stream is supplied at one side of the molded body and removed at the other side of the molded body.

18. Method according to one of the claims 16 or 17, **characterized in that** the protective gas stream is maintained in a narrow, limited volume above the molded body to be built up.

19. Method according to claim 18, **characterized in that** the protective gas stream is maintained at a maximum of 20 mm above the molded body to be built up.

20. Method according to one of the claims 16 to 19, **characterized in that** the protective gas is maintained at a pressure of greater than 0.1 MPa.

21. Method according to claim 20, **characterized in that** the protective gas is maintained at a pressure of 0.2 to 0.6 MPa.

22. Method according to claim 16, **characterized in that** the protective gas stream is maintained in the area of the respective molten location using a nozzle, whereby the nozzle is guided together with the laser beam.

23. Method according to claim 22, **characterized in that** the metallic material in powder form is applied with a grain size of < 100 µm.

## Revendications

1. Procédé pour la fabrication d'un corps moulé, en particulier d'un prototype de produit ou de composant, d'un prototype d'outil ou d'une pièce de rechange selon des données DAO tridimensionnelles d'un modèle de corps moulé par constitution en couches à partir d'une matière première métallique en poudre, dans lequel plusieurs couches de poudre sont appliquées l'une après l'autre l'une sur l'autre, chaque couche de poudre étant réchauffée, avant d'appliquer la couche de poudre suivante, avec un rayon laser focalisé à une température prédéfinie dans une zone prédéterminée qui correspond à une zone de section sélectionnée du modèle du corps moulé et dans lequel le rayon laser est guidé respectivement selon les données de section DAO de la zone de section sélectionnée du modèle sur la couche de poudre respective, ce par quoi cette couche de poudre est fixée à la couche sous-jacente, **caractérisé en ce que** la poudre de matière première métallique est appliquée comme poudre de matière première métallique exempte de liant et de fondant, qu'elle est réchauffée par le rayon laser à la température de fusion, que l'énergie du rayon laser est sélectionnée telle que la poudre de matière première métallique est complètement fondue sur toute son épaisseur de couche au point d'impact du rayon laser, que le rayon laser est guidé dans plusieurs pistes sur la zone prédéfinie de la couche de poudre de matière première de telle manière que chaque piste suivante du rayon laser recouvre partiellement la piste précédente et qu'une atmosphère de gaz protecteur est maintenue sur la zone d'interaction du rayon laser avec la poudre de matière première métallique.

2. Procédé selon la revendication 1, **caractérisé en ce qu**'un écart de piste Δyₛ de rayons laser voisins est respecté selon la prescription 2 > dₛ/Δyₛ > 1,5, dₛ étant le diamètre du rayon laser dans le plan de fusion.

3. Procédé selon la revendication 2, **caractérisé en ce que** le diamètre du rayon laser est réglé de l'ordre de 0,2 à 0,5 mm, de préférence à 0,35 mm maximum.

4. Procédé selon la revendication 3, **caractérisé en ce que** le diamètre du rayon laser est réglé à 0,35 mm maximum.

5. Procédé selon la revendication 3, **caractérisé en ce que** chaque couche de la structure de type couche est divisée en surfaces partielles, chaque surface partielle étant à son tour divisée en longueurs de vecteur de balayage que ce rayon laser balaye l'une après l'autre.

6. Procédé selon la revendication 5, **caractérisé en ce que** la longueur de vecteur de balayage maximale est réglée à 20 mm.

7. Procédé selon la revendication 6, **caractérisé en ce que** la longueur de vecteur de balayage maximale est réglée à environ 10 mm.

8. Procédé selon la revendication 5 ou 6, **caractérisé en ce que** les différentes longueurs de vecteur de balayage sont balayées par le rayon laser avec un mouvement de va-et-vient.

9. Procédé selon l'une des revendications 1 à 8, **caractérisé en ce que** le rayon laser est incident en formant un angle avec la normale de la surface de la couche de poudre.

10. Procédé selon la revendication 9, **caractérisé en ce que** le rayon laser est incident en formant un angle d'environ 45° avec la normale de la surface de la couche de poudre.

11. Procédé selon l'une des revendications 1 à 10, **caractérisé en ce que** la couche de poudre respective en poudre de matière première métallique est appliquée avec une épaisseur entre 0,05 mm et 0,2 mm.

12. Procédé selon la revendication 11, **caractérisé en ce que** la couche de poudre respective en poudre de matière métallique est appliquée avec une épaisseur d'environ 0,1 mm.

13. Procédé selon l'une des revendications 1 à 12, **caractérisé en ce que** la vitesse de balayage du rayon laser est réglée à une valeur entre 50 et 250 mm/s.

14. Procédé selon la revendication 13, **caractérisé en ce que** la vitesse de balayage du rayon laser est réglée à une valeur d'environ 150 mm/s.

15. Procédé selon l'une des revendications 1 à 14, **caractérisé en ce que** dans la zone de fusion un flux d'énergie de l'ordre d'1 à 3 J/mm² est produit.

16. Procédé selon l'une des revendications 1 à 15, **caractérisé en ce que**, pendant la fusion, un flux de gaz protecteur est maintenu sur la surface du corps moulé en train de se constituer.

17. Procédé selon l'une des revendications 1 à 16, **caractérisé en ce que** le gaz protecteur est amené par l'un des côtés du corps moulé et est évacué sur l'autre côté du corps moulé.

18. Procédé selon l'une des revendications 16 ou 17, **caractérisé en ce que** le flux de gaz protecteur est maintenu dans un volume limité de manière étroite au-dessus du corps moulé en train de se constituer.

19. Procédé selon la revendication 18, **caractérisé en ce que** le flux de gaz protecteur est maintenu dans une zone au maximum 20 mm au-dessus du corps moulé en train de se constituer.

20. Procédé selon l'une des revendications 16 à 19, **caractérisé en ce que** le gaz protecteur est maintenu au-dessous d'une surpression de plus de 0,1 MPa.

21. Procédé selon la revendication 20, **caractérisé en ce que** le gaz protecteur est maintenu au-dessous d'une surpression de 0,2 à 0,6 MPa.

22. Procédé selon la revendication 16, **caractérisé en ce que** le flux de gaz protecteur est maintenu dans la zone du point de fusion respectif au moyen d'une tuyère, la tuyère étant entraînée par le mouvement du rayon laser.

23. Procédé selon la revendication 22, **caractérisé en ce que** la poudre de matière première métallique est appliquée avec une granularité de < 100 µm.
